Europäisches Patentamt

European Patent Office

Office européen des brevets

(19)

(11) Numéro de publication: **0 203 014 B1**

(12) **FASCICULE DE BREVET EUROPEEN**

(45) Date de publication de fascicule du brevet:
**26.06.91**

(51) Int. Cl.⁵: **G03B 27/68**

(21) Numéro de dépôt: **86420121.5**

(22) Date de dépôt: **12.05.86**

(54) **Appareil photo-mécanique à contact pour la correction des déformations que subit l'image dans l'emboutissage de boîtes métalliques.**

(30) Priorité: **13.05.85 IT 8554785**

(43) Date de publication de la demande:
**26.11.86 Bulletin 86/48**

(45) Mention de la délivrance du brevet:
**26.06.91 Bulletin 91/26**

(84) Etats contractants désignés:
**BE DE FR GB IT LU NL SE**

(56) Documents cités:
**EP-A- 0 017 421**
**US-A- 3 445 165**
**US-A- 4 396 280**

(73) Titulaire: **Paccagnella, Giuseppe**
**Via Vigolo, 94**
**Vicenza(IT)**

(72) Inventeur: **Paccagnella, Giuseppe**
**Via Vigolo, 94**
**Vicenza(IT)**

(74) Mandataire: **Séraphin, Léon**
**PECHINEY 28, rue de Bonnel**
**F-69433 Lyon Cedex 03(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention a pour objet un appareil photo-mécanique à contact pour la correction des déformations que subit l'image dans l'emboutissage de boîtes métalliques.

Dans les dernières années, sous l'impulsion technologique et écologique, les boîtes métalliques en tôle étamée, agrafées et soudées à l'étain, ont été abandonnées avant tout à cause de la possibilité qu'il y a toujours d'une contamination du produit, et ensuite parce que le procédé de production était périmé.

Elles ont été remplacées par des boîtes métalliques qui ne sont plus soudées, constituées d'un godet embouti en une seule pièce, comme un gobelet, avec un couvercle à ouverture rapide.

Il s'est cependant posé un nouveau problème : alors que dans les boîtes traditionnelles, la tôle plane imprimée était ensuite soudée pour former un tube et qu'en conséquence, l'image imprimée ne subissait pas de modifications, dans les nouvelles boîtes embouties, on imprime sur une tôle plane après quoi le godet est formé par emboutissage et l'image éprouve tous les allongements que subit le métal au cours de cet emboutissage.

Il en est résulté des boîtes embouties sur lesquelles les textes, les dessins et les photographies apparaissent d'autant plus allongés qu'on se rapproche davantage du bord de la boîte.

Les systèmes de correction utilisés antérieurement à la nouvelle invention avaient tous pour base l'utilisation de lentilles anamorphiques qui, outre qu'ils donnaient des résultats très défectueux a cause du flou, rendaient le processus non fiable, lent et difficilement reproductible, et ne permettaient pas une adaptation aux divers types de déformations qui se présentent.

On connaît, par ailleurs, par le brevet US-A-3 445 165, un appareil photo-mécanique à contact permettant le transfert d'une image sur une pellicule sensible en changeant ses proportions. Cet appareil comprend un pinceau de lumière devant lequel se déplacent un premier châssis portant l'original et un second châssis portant une pellicule sensible, le premier châssis ayant un mouvement rectiligne et le deuxième châssis ayant un mouvement longitudinal parallèle de vitesse commandée par une barre inclinable articulée sur ce châssis et portant un coulisseau dont le mouvement transversal est réglé par le mouvement du premier châssis. Cet appareil permet d'obtenir sur la pellicule sensible une image allongée ou raccourcie de façon linéaire, mais pas des allongements ou raccourcissements variables.

En relevant les allongements que subit une boîte emboutie du fait de l'étirage du métal, on remarque que cet allongement n'est pas linéaire, mais présente un accroissement variable en fonction du type de métal utilisé, du type de poinçon et de presse et du rapport de la hauteur à la largeur du récipient.

Il s'en suit qu'il est nécessaire d'avoir un système très souple permettant de faire les variations correctives en fonction des paramètres énoncés ci-dessus.

C'est là le but que se propose la nouvelle invention qui, au lieu d'une lentille anamorphique, a pour base la copie à contact. Le résultat photographique est de qualité élevée, avec une reproductibilité parfaite et facilité d'exécution à bon marché.

En effet, tout original qui doit être reproduit sur une boîte métallique emboutie doit subir une déformation de sens inverse de celui de l'allongement, de façon à compenser celui-ci et à reproduire l'original avec ses dimensions réelles.

Dans la présente invention, on utilise, comme dans US-A-3 445 165, un appareil photo-mécanique à contact tel que décrit précédemment. Selon l'invention, le coulisseau qui se déplace sur une base articulée porte un palpeur rotatif qui vient s'appuyer pendant une partie du mouvement du deuxième châssis sur un gabarit fixe de profil choisi, de façon à réaliser un mouvement à vitesse progressivement variable de ce deuxième châssis. Ce gabarit est typiquement fixé sur une des glissières guidant le mouvement longitudinal du deuxième châssis.

On utilise alors cet appareil pour imprimer l'image déformée d'un décor original sur une ébauche métallique plane, destinée à être emboutie en une boîte, le gabarit dudit appareil permettant de corriger les zones de déformation progressive de cette image lors de l'emboutissage de ladite boîte, pour ainsi obtenir une image correcte du décor original sur ladite boîte.

Donc, si l'un des mouvements de l'original ou de la pellicule sensible est uniforme et l'autre accéléré, on aura une déformation à raccourcissement progressif qui sera parfaitement à l'inverse des déformations d'étirage.

L'appareil est ainsi constitué de deux châssis coplanaires, l'un intérieur et l'autre extérieur ouvert d'un côté, qui se déplacent sur les mêmes guides.

Une vitre transparente est fixée sur le châssis intérieur et sous cette vitre, il y a la lampe d'exposition qui est contenue dans une boîte étanche à la lumière et munie d'une étroite fente capable de créer un éclairage par rais de lumière. Le châssis intérieur est mis en mouvement rectiligne uniforme le long des guides, dans un sens ou dans l'autre, par un système électro-mécanique constitué par un moteur électrique et un dispositif de transmission qui peut être une courroie crantée ou une vis sans fin avec vis femelle associée.

Le châssis extérieur est dans le même plan que le châssis intérieur et a un côté ouvert, en conséquence de quoi, vu en plan, il a une forme en U.

Il est monté sur les mêmes glissières que le châssis intérieur et son mouvement en dérive.

Le déplacement du châssis extérieur est commandé par une barre ou axe articulé sur la base de l'appareil. Sur cette barre orientable est calé un coulisseau qui est solidarisé par un joint articulé un autre coulisseau qui se déplace sur une tige perpendiculaire aux glissières par lesquelles sont guidés les mouvements des deux châssis.

De cette façon, quand le châssis intérieur est déplacé le long des glissières longitudinales, le coulisseau qui glisse sur la barre articulée fait déplacer l'autre coulisseau qui en est solidaire et, suivant l'inclinaison de la barre orientable, le déplace parallèlement à l'axe orthogonal.

Quatre poulies à gorge montées sur roulements à billes sont fixées sous le châssis intérieur, aux quatre coins, et sur ces poulies passe une courroie en acier mise sous tension par un tendeur approprié.

En solidarisant par un joint cette courroie avec le coulisseau calé sur l'axe orthogonal, et par un autre joint cette même courroie avec le châssis extérieur, il est possible de transmettre le mouvement du châssis intérieur au châssis extérieur avec une vitesse inférieure en fonction de l'angle d'inclinaison de la barre articulée. En effet, la barre étant inclinée, le curseur calé sur l'axe orthogonal se déplacera vers le haut et transmettra ainsi au châssis extérieur une vitesse ralentie proportionnellement à l'inclinaison de la barre.

Le coulisseau calé sur la barre articulée peut être muni d'un palpeur tournant constitué par un roulement à billes de petit diamètre.

Si l'on monte à l'avance, en fonction de la déformation progressive désirée, un gabarit métallique adéquat, ou came, il est possible de commander ainsi une inclinaison variable de façon continue de la barre articulée et par conséquent de faire varier ainsi d'une façon continue la vitesse du châssis extérieur.

On réalise de cette façon le système à vitesse constante du châssis intérieur et à vitesse progressivement variable du châssis extérieur, obtenant ainsi les deux mouvements relatifs de la pellicule originale et de la pellicule sensible et on a, en conséquence, une copie de l'original déformée de la façon désirée, projetée et calculée.

Il est possible d'obtenir plusieurs copies de l'original déformées avec une précision et une reproductibilité élevées, en mettant sur le châssis intérieur portant l'original des pions de positionnement qui s'engagent dans des trous correspondants du film original.

Avec un gabarit ou came particulier, on obtiendra un couple particulier de rapports de vitesse, rapports toujours constants si la vitesse du moteur varie, de façon à obtenir une variation d'accroissement toujours constante et reproductible.

D'autres caractéristiques et avantages de la présente invention apparaîtront plus en évidence dans la description détaillée ci-après d'un mode de réalisation préférentiel de son objet, donnée à titre purement indicatif et sans aucun caractère limitatif, en se référant au dessin annexé qui représente l'appareil par deux vues d'ensemble en plan.

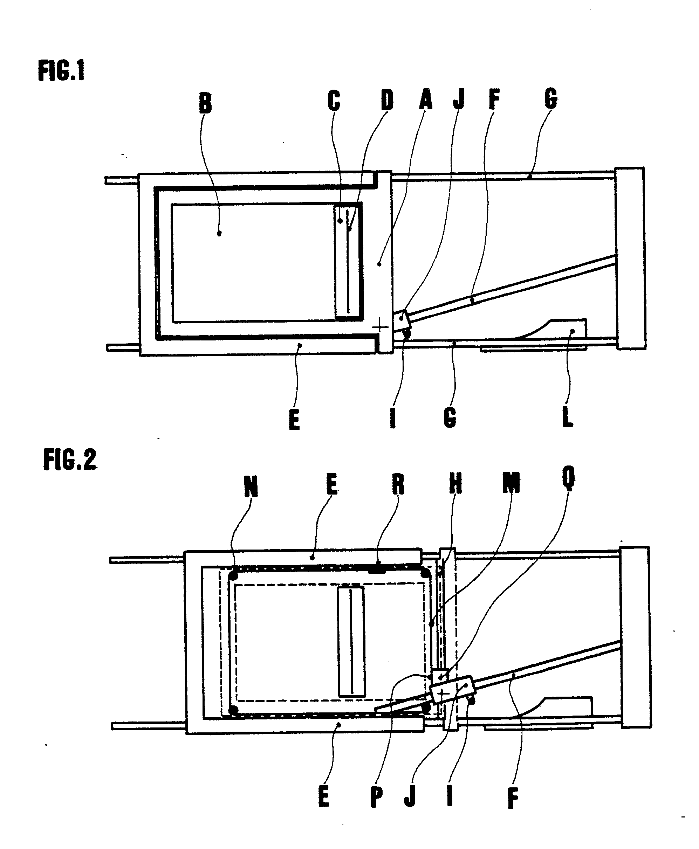

La fig. 1 montre une vue en plan de l'appareil monté, tandis que la fig. 2 représente le système cinématique de transmission du mouvement du châssis intérieur au châssis extérieur.

Sur la fig.1, la lettre (A) désigne le châssis intérieur portant l'original, la lettre (B) la vitre correspondante et la lettre (C) la boîte statique placée en-dessous qui contient la lampe pour l'exposition et la lettre (D) désigne la fente qui crée un rais de lumière.

Le châssis extérieur portant la pellicule sensible est représenté sous le repère (E), tandis que la lettre (F) désigne la barre articulée qui peut prendre diverses inclinaisons dont résultent les variations de vitesse du châssis extérieur et que (J) désigne le coulisseau glissant sur cette barre (F).

Nous avons repéré par la lettre (G) les glissières qui guident le mouvement longitudinal, par la lettre (H) la barre orthogonal du système cinématique, par la lettre (I) le palpeur rotatif monté sur le coulisseau (J) de la barre inclinable, et par la lettre (L) le gabarit ou came dessiné et construit pour obtenir la déformation désirée.

La fig.2 représente le système cinématique et le système à double coulisseau qui relie et règle le mouvement du châssis extérieur en fonction du mouvement du châssis intérieur et de l'inclinaison de la barre articulée.

La courroie en acier (M) passant sur les quatre poulies à gorge (N) montées sur roulement à billes et fixées sous les quatre coins du châssis intérieur est solidarisée par un joint (P) avec le coulisseau (Q) calé sur la barre orthogonale (H) et par un autre joint (R) avec le châssis extérieur (E).

La présente invention pourra évidemment prendre dans sa réalisation pratique également une forme différente de celle illustrée ci-dessus, mais toutes rentrent dans le même principe de l'invention.

On pourra, en particulier, faire varier la position des châssis et de la barre articulée, ainsi que le système cinématique de transmission; en outre, tous les détails de la construction pourront être remplacés par des éléments techniquement équivalents tels qu'ils apparaîtront évidents à un technicien spécialiste du secteur, sans pour autant sortir du cadre de protection de la présente invention telle que revendiquée.

## Revendications

1. Appareil photo-mécanique à contact utilisable pour corriger les déformations que subit l'image reproduite sur une boîte métallique dans l'emboutissage de cette boîte, comprenant une source lumineuse en forme de pinceau de lumière (D) devant lequel se déplacent un premier châssis (A) portant un original et un second châssis (E) portant une pellicule sensible, le premier châssis (A) ayant un mouvement rectiligne et le deuxième châssis (E) ayant un mouvement longitudinal parallèle, de vitesse commandée par une barre inclinable (F) articulée sur le châssis (E) et portant un coulisseau (J) dont le mouvement transversal est réglé par le mouvement du premier châssis (A), caractérisé en ce que le coulisseau (J) porte un palpeur rotatif (I) qui vient s'appuyer pendant une partie du mouvement du deuxième châssis (E) sur un gabarit fixe (L) de profil choisi, de façon à réaliser un mouvement à vitesse progressivement variable de ce deuxième châssis (E).

2. Appareil selon la revendication 1, dans lequel le gabarit (L) est fixé sur une des glissières (G) guidant le mouvement longitudinal du deuxième châssis (E).

3. Utilisation de l'appareil de la revendication 1 ou 2 pour imprimer l'image déformée d'un décor original sur une ébauche métallique plane, destinée à être emboutie en une boîte, le gabarit (L) dudit appareil permettant de corriger les zones de déformation progressive de cette image lors de l'emboutisssage de ladite boîte, pour ainsi obtenir une image correcte du décor original sur ladite boîte.

## Claims

1. Photo-mechanical contact apparatus which can be used to correct the deformations to which the image reproduced on a metal box is subject in the drawing of this box, comprising a light source in the form of a beam of light (D) in front of which there travel a first frame (A) carrying an original and a second frame (E) carrying a sensitive skin, the first frame (A) having a rectilinear movement and the second frame (E) having a parallel longitudinal movement, at a speed controlled by an inclinable bar (F) articulated to the frame (E) and carrying a slider (J) of which the transverse movement is regulated by the movement of the first frame (A), characterised in that the slider (J) carries a rotating probe (I) which comes and rests, during a proportion of the movement of the second frame (E), on a fixed template (L) of selected profile so as to produce a movement at a progressively variable speed of this second frame (E).

2. Apparatus according to claim 1, in which the template (L) is fixed on one of the slideways (G) guiding the longitudinal movement of the second frame (E).

3. Use of the apparatus of claim 1 or 2 to imprint the deformed image of an original decoration on a flat metallic blank intended to be drawn into a box, the template (L) of said apparatus allowing the regions of progressive deformation of this image during drawing of said box to be corrected in order thus to obtain a correct image of the original decoration on said box.

## Ansprüche

1. Photomechanisches Kontaktgerät zur Korrektion der Deformationen, die das aufgenommene Bild auf einer metallischen Büchse beim Extrudierprozeß dieser Büchse durchmacht, mit einer Lichtquelle in Form eines Lichtstrahls (D), vor dem sich ein erster Rahmen (A), der ein Original trägt, und ein zweiter Rahmen (E), der einen empfindlichen Film trägt, verlagern, wobei der erste Rahmen (A) eine geradlinige Bewegung und der zweite Rahmen (E) eine parallele Längsbewegung mit einer durch einen schrägstellbaren Stab (F) gesteuerten Geschwindigkeit durchführt, der an den Rahmen (E) angelenkt ist und einen Schlitten (J) trägt, dessen Querbewegung durch die Bewegung des ersten Rahmens (A) gesteuert wird, **dadurch gekennzeichnet,** daß der Schlitten (J) einen drehbaren Fühler (I) trägt, der sich während eines Bewegungsabschnittes des zweiten Rahmens (E) an einer festen Schablone (L) abstützt, um eine Bewegung mit zunehmend veränderbarer Geschwindigkeit dieses zweiten Rahmens (E) auszuführen.

2. Gerät nach Anspruch 1, **dadurch gekennzeichnet,** daß die Schablone (L) an einer der Gleitschienen (G) befestigt ist, die die Längsbewegung des zweiten Rahmens (E) leiten.

3. Anwendung des Geräte nach Anspruch 1 oder 2, **dadurch gekennzeichnet,**

daß das deformierte Bild von einer Originalverzierung auf einen ebenen metallischen Rohling gedruckt wird, der zu einer Büchse gezogen werden soll, wobei die Schablone (L) des Geräts gestattet, die Bereiche von fortschreitender Deformation dieses Bildes während des Extrudierprozesses dieser Büchse zu korrigieren, um so ein korrektes Bild der Originalverzierung auf der Büchse zu erhalten.

**FIG.1**

B    C  D  A  J  F    G

E    I    G    L

**FIG.2**

N    E    R  H  M    O

E  P  J  I    F